(19) **Europäisches Patentamt European Patent Office Office européen des brevets**

(11) **EP 1 919 099 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(51) Int Cl.:
**H04B 7/06** (2006.01)

(21) Anmeldenummer: **08002659.4**

(22) Anmeldetag: **12.04.2002**

(54) **Closed-loop-Antennendiversitätsverfahren in einem zellularen Funk-Kommunikationssystem**

Closed-loop antenna diversity method in a cellular radio communication system

Procédé de diversité d'antennes en boucle fermée dans un système de communication radio cellulaire

(84) Benannte Vertragsstaaten:
**DE FR GB**

(30) Priorität: **15.05.2001 DE 10123611**

(43) Veröffentlichungstag der Anmeldung:
**07.05.2008 Patentblatt 2008/19**

(62) Dokumentnummer(n) der früheren Anmeldung(en) nach Art. 76 EPÜ:
**02737789.4 / 1 388 222**

(73) Patentinhaber: **SIEMENS AKTIENGESELLSCHAFT 80333 München (DE)**

(72) Erfinder:
• **Brandes, Denis
  38176 Wendeburg (DE)**
• **Raaf, Bernhard
  82061 Neuried (DE)**
• **Wiedmann, Ralf
  81369 München (DE)**

(56) Entgegenhaltungen:
**WO-A-00/72464    WO-A-01/28128**

• **"Universal Mobile Telecommunications System (UMTS); Physical layer procedures (FDD) (3G TS 25.214 version 3.1.1 Release 1999)" ETSI TS 125 214 V3.1.1 (2000-01), Januar 2000 (2000-01), XP002207980**

EP 1 919 099 B1

# EP 1 919 099 B1

## Beschreibung

Die Erfindung betrifft ein Verfahren zum Betreiben eines zellularen Funk-Kommunikationsystems, das Antennendiversität und zeitweilige Übertragungsunterbrechungen unterstützt, sowie Teilnehmer- und Basisstationen für ein solches System.

In einem Funk-Kommunikationsystem mit Antennendiversität, in dem zwei Stationen miteinander per Funk kommunizieren, ist wenigstens eine dieser Stationen mit einer Mehrzahl von Antennen ausgestattet und in der Lage, ein an die jeweils andere Station zu übertragendes Funksignal über die einzelnen Antennen jeweils gewichtet mit den Koeffizienten eines Gewichtungsvektors auszustrahlen, um so eine selektiv auf diese andere Station ausgerichtete Richtcharakteristik des Funksignals zu realisieren. Die zum erfolgreichen Ausrichten des Gewichtungsvektors benötigten Informationen werden von der anderen Station gemessen und als eine Rückkopplungsinformation an die erste Station geliefert.

Ein bekanntes System, das in dieser Weise arbeitet, ist das UMTS-Mobilfunksystem. Dieses System verfügt neben Open-Loop Betriebszuständen, die keine Rückkopplungsinformation benötigen, über zwei Betriebszustände mit Closed-Loop Antennendiversität, als Closed-Loop-Mode 1 und 2 bezeichnet. In einem Betriebszustand ohne Closed-Loop-Antennendiversität führen die Teilnehmerstationen des UMTS-Systems im allgemeinen nicht die Messungen aus, die für die Bestimmung der Rückkopplungsinformation erforderlich sind, da diese in einem Open-Loop-Betriebszustand nicht benötigt wird oder eventuell auch gar nicht gemessen werden kann. Wenn jedoch in einen Zustand mit Closed-Loop Antennendiversität umgeschaltet wird, so muss von Anfang an ein Gewichtungsvektor vorliegen, den die Basisstation zum Senden an die Teilnehmerstationen verwenden kann. Es sind daher für die beiden Betriebszustände mit Closed-Loop Antennendiversität Default-Gewichtungsvektoren vordefiniert, die während des ersten Zeitschlitzes nach dem Übergang in einen Antennendiversitätsbetriebszustand verwendet werden und die in dem Maße, wie die Teilnehmerstation die Rückkopplungsinformation an die Basisstation liefern, durch aktuelle Gewichtungsvektoren ersetzt werden.

Allgemein sei auf das Kapitel 8 der technischen Spezifikation ETSI TS 125 214 V3.1.1 (2000-01) "Physical Layer Procedures (FDD)" (3G TS 25.214 version 3.1.1 Release 1999) verwiesen.

Der Übergang in einen Antennendiversitätsbetriebszustand kann sich sowohl auf die gesamte Basisstation und allen zu dieser Basisstation in Verbindung stehenden Teilnehmerstationen beziehen als auch auf eine einzelne Teilnehmerstation die in Verbindung mit einer Basisstation steht. Letzterer ist der in der Praxis häufiger auftretende Fall.

Nach dem Übergang in einen der Zustände in Closed-Loop Antennendiversität geht die UMTS-Basisstation davon aus, dass in einem Uplink-Signal, das sie von einer Teilnehmerstation empfängt, Rückkopplungsinformation enthalten ist, anhand derer sie in der Lage ist, einen aktuellen Gewichtungsvektor auszuwählen, der an die tatsächlichen Empfangsbedingungen der Teilnehmerstation gut angepasst ist.

Zeitweilige Unterbrechungen des Uplink- und Downlink-Signals können in Mobilfunk-Kommunikationssystemen erforderlich sein, um es einer Teilnehmerstation zu ermöglichen, Feldstärkemessungen an Funksignalen benachbarter Basisstationen durchzuführen und zu überprüfen, ob eine dieser benachbarten Basisstationen möglicherweise bessere Empfangsbedingungen liefert als die hier als Partnerstation bezeichnete Basisstation, mit der die Teilnehmerstation gegenwärtig kommuniziert.

Bei einer einfachen Teilnehmerstation, bei der Sende- und Empfangsteil nicht unabhängig voneinander abstimmbar sind, muss während der Messungen am Signal der benachbarten Station auch das Sendeteil verstimmt werden, so dass hier Unterbrechungen im Downlink und Uplink jeweils zeitgleich auftreten.

In einem solchen Fall kann nach Ende der Unterbrechung der Closed-Loop-Betriebszustand in der gleichen Weise initialisiert werden wie wenn aus einem anderen Betriebszustand in einen Zustand mit Closed-Loop-Antennendiversität umgeschaltet wird.

Um einer Teilnehmerstation mit einem einzigen Empfangsteil Messungen an den Signalen benachbarter Basisstationen zu ermöglichen, ist eine Unterbrechung des Downlink-Signals unvermeidlich, da das Empfangsteil zur Durchführung der Messungen auf die Frequenz der benachbarten Basisstation abgestimmt werden muss und in dieser Zeit das Signal der Partnerstation nicht verfolgen kann. Wenn das Sendeteil der Teilnehmerstation unabhängig vom Empfangsteil abstimmbar ist, so kann während der Downlink-Unterbrechung im Uplink weiter übertragen werden.

Bei einer Teilnehmerstation mit mehreren Empfangsteilen, von denen eines ständig auf das Downlink-Signal der Partnerstation abgestimmt bleiben kann und das zweite für Messungen an benachbarten Basisstationen einsetzbar ist, sind Downlink-Unterbrechungen nicht erforderlich. Es können aber zeitweilige Unterbrechungen des Uplink-Signals notwendig sein, wenn das Senden des Uplink-Signals die durchzuführenden Messungen z.B. aufgrund nahe benachbarter Frequenzen stören würde.

Um die Übertragungskapazität eines Mobilfunk-Kommunikationssystems optimal zu nutzen, ist es natürlich wünschenswert, das Ausmaß der Unterbrechungen von Uplink- oder Downlink, die mit den Messungen an den Signalen der Nachbarstationen einhergehen, so weit wie möglich zu beschränken und voneinander unabhängige Unterbrechungen nur im Uplink oder nur im Downlink zuzulassen. Dies wirft jedoch mehrere Probleme auf. Zum einen kann während einer Uplink-Unterbrechung die Teilnehmerstation nicht die Rückkopplungsinformation liefern, die die Basisstation benötigt, um das Downlink-Signal an diese Teilnehmerstation weiter senden zu können. Zum anderen ist die Teilnehmerstation nicht in der Lage während einer Downlink-Unterbrechung die erforderlichen Messungen durchzuführen, die zur Festlegung der Rückkopplungsinformation erforderlich sind.

Darüber hinaus ist noch der Fall zu berücksichtigen, dass ein Übergang in einen Betriebszustand mit Closed-Loop-Antennendiversität in eine Unterbrechung der Uplink- und/oder Downlink-Übertragung fällt. Egal ob nur Uplink, nur Downlink oder beide unterbrochen sind, steht vom Beginn des Closed-Loop-Betriebszustands bis zum Ende der Unterbrechung der Basisstation keine aktuelle Rückkopplungsinformation zur Verfügung, anhand derer sie die Strahlformung steuern könnte.

Aus den genannten Gründen ist bei dem herkömmlichen UMTS-System ein optimaler Übergang zwischen Betriebszuständen mit und ohne Closed-Loop Antennendiversität nur möglich, wenn die Kommunikation der Basisstation mit den von dem Übergang betroffenen Teilnehmerstationen nicht gerade unterbrochen ist. Dies zu gewährleisten verkompliziert erheblich den Wechsel zwischen Betriebszuständen mit und ohne Closed-Loop Antennendiversität. Wenn eine Basisstation eine große Zahl von Teilnehmerstationen versorgt, so ist es praktisch nicht möglich, für alle Teilnehmerstationen gleichzeitig eine Betriebszustandsänderung zu vollziehen, da meist immer eine darunter sein wird, deren Kommunikation zeitweilig unterbrochen ist.

Aufgabe der vorliegenden Erfindung ist, ein Verfahren zum Betreiben eines zellularen Funk-Kommunikationssystems und eine Basisstation für ein solches System anzugeben, die Unterbrechungen des Downlinksignals zu beliebigen Zeitpunkten unterstützen und die auf einfache Weise und ohne Rücksicht auf eventuelle Übertragungsunterbrechungen einen Wechsel des Systems zwischen Zuständen mit und ohne Closed-Loop Antennendiversität ermöglichen.

Diese Aufgabe wird gelöst durch ein Verfahren nach Anspruch 1 sowie eine Basisstation nach Patentanspruch 5. Ausgestaltungen der Erfindung sind Gegenstand abhängiger Patentansprüche.

Gegenstand der Erfindung ist ein Verfahren zum Betreiben eines zellularen Funk-kommunikationssystems mit einer zwei Antennen aufweisenden Basisstation, die einen Betriebszustand mit Closed-Loop-Antennendiversität unterstützt, in dem sie ein Downlink-Signal an den einzelnen Antennen jeweils gewichtet mit Komponenten eines Gewichtungsvektors ausstrahlt, und mit einer Teilnehmerstation zum Empfangen des Downlink-Signals und Senden eines Uplink-Signals an die Basisstation, wobei die Teilnehmerstation durch Messungen an dem Downlink-Signal einen Gewichtungsvektor ermittelt, der einen guten Empfang des Downlink-Signals an der Teilnehmerstation gewährleistet und Rückkopplungsinformation an die Basisstation liefert, die den ermittelten Gewichtungsvektor repräsentiert, - bei dem Signale in Zeitschlitzen eines Rahmens übertragen werden, wobei ein Rahmen 15 Zeitschlitze aufweist,

- bei dem bei einer Unterbrechung des Downlink-Signals die Teilnehmerstation im Uplink-Signal Rückkopplungsinformation an die Basisstation liefert, die einen vor der Unterbrechung festgelegten Gewichtungsvektor repräsentiert,
- bei dem das Funkkommunikationssystem zwischen einem Betriebszustand ohne Closed-Loop-Antennendiversität und dem Betriebszustand mit Closed-Loop-Antennendiversität umschaltbar ist,
- bei dem in dem Fall, dass die Unterbrechung des Downlink-Signals sich über einen Zeitpunkt des Umschaltens in den Betriebszustand mit Closed-Loop-Antennendiversität erstreckt, die Basisstation das Downlink-Signal während eines ersten Zeitschlitzes nach der Unterbrechung des Downlink-Signals mit einem vorgegebenen Gewichtungsvektor gewichtet ausstrahlt, wobei der Gewichtungsvektor folgende Komponenten für die zwei Antennen aufweist:

$$w_1 = 1/\sqrt{2}$$

$$w_2 = \frac{1}{2}(1+j) \, ,$$

- und während des nachfolgenden Zeitschlitzes mit einem aus der Rückkopplungsinformation der Teilnehmerstation berechneten Gewichtungsvektor gewichtet ausstrahlt, wobei der Gewichtungsvektor folgende Komponenten für die zwei Antennen aufweist:

$$w_1 = 1/\sqrt{2}$$

$$w_2 = \frac{\sum_{i-1}^{i} \cos(\phi_i)}{2} + j \frac{\sum_{i-1}^{i} \sin(\phi_i)}{2}$$

wobei i die Nummer des ersten Zeitschlitzes nach der Unterbrechung bezeichnet, und wobei für die Berechnung der Komponente $w_2$ des Gewichtungsvektors ein aus der Rückkopplungsinformation der Teilnehmerstation bestimmter Phasenanpassungswert $\phi_i$ für den ersten Zeitschlitz nach der Unterbrechung verwendet wird und ein fiktiver Phasenanpassungswert $\phi_{i-1}$ für den unmittelbar vorhergehenden (i-1)ten Zeitschlitz, in dem noch kein Downlink-Signal gesendet worden ist, gleich n/2 gesetzt wird, wenn i=0, 2, 4, 6, 8, 10, 12 oder 14 ist, und gleich 0 gesetzt wird, wenn i=1, 3, 5, 7, 9, 11 oder 13 ist.

Bei einem Funkkommunikationssystem, das zwischen einem Betriebszustand ohne Closed-Loop-Antennendiversität und dem Betriebszustand mit Closed-Loop-Antennendiversität umschaltbar ist, ist im allgemeinen ein Default-Gewichtungsvektor definiert, der zum Gewichten des Downlink-Signals im ersten Zeitschlitz nach dem Umschalten genutzt wird, wenn noch keine Rückkopplungsinformation an der Basisstation vorliegt. In diesem Falle ist der festgelegte Gewichtungsvektor zweckmäßigerweise mit dem Default-Vektor identisch.

Das Verfahren wird vorzugsweise in einem UMTS-Funk-Kommunikationssystem eingesetzt. Hier ermöglicht es eine Initialisierung des Gewichtungsvektors für den nach dem geltenden Standard noch nicht behandelten Fall, dass ein Übergang in einen Betriebszustand mit Closed-Loop-Antennendiversität mit einer Unterbrechung des Downlink-Signals zusammenfällt, so dass die von der Basisstation benötigte Rückkopplungsinformation von der Teilnehmerstation nicht ermittelt werden kann.

Vorzugsweise besteht die in einem solchen Fall bis zum Ende der Downlink-Unterbrechung gelieferte Rückkopplungsinformation aus Nullen.

Wenn der Betriebszustand mit Antennendiversität der Closed-Loop-Mode 1 des UMTS-Systems ist, so führt das Senden von Nullen dazu, dass die Basisstation den zum Ausstrahlen eines ersten Zeitschlitzes nach dem Übergang in den Closed-Loop-Mode 1 vorgegebenen Default-Gewichtungsvektor $w^{(0)}=(1/\sqrt{2}; ½(1+j))$ so lange verwendet, bis die Teilnehmerstation eine Messung durchgeführt hat, die einen anderen Gewichtungsvektor als besser geeignet erscheinen lässt und die diesbezügliche Rückkopplungsinformation an die Basisstation übertragen worden ist. Wenn der Betriebszustand mit Rückkopplung der Closed-Loop-Mode 2 ist, so ist es unmöglich, den für den ersten Zeitschlitz nach Übergang in den Closed-Loop-Mode 2 verwendeten Gewichtungsvektor (½; -½) erneut zu verwenden, nachdem ein komplettes Wort der Rückkopplungsinformation übertragen worden ist. Die Rückkopplungsinformation erlaubt es lediglich, relative Leistungen der zwei Antennenelemente von 0,2:0,8 bzw. 0,8:0,2 zu spezifizieren. Unter den Gewichtungsvektoren, die im Closed-Loop-Mode 2 zur Verfügung stehen, sind die Vektoren (0,2; -0,8) oder (0,8;-0,2) dem Default-Gewichtungsvektor am ähnlichsten, denn sie weisen die gleiche relative Phasenlage der Vektorkomponenten auf. Sie sind nach UMTS-Standard mit Rückkopplungsinformationswörtern 0000 bzw. 0001 anwählbar. Der einfacheren Implementierbarkeit halber wird man in Closed-Loop-Mode 1 und 2 nur Nullen als Rückkopplungsinformation übertragen.

Einer weiteren Ausgestaltung des erfindungsgemäßen Verfahrens zufolge steht für die Übertragung der Rückkopplungsinformation in jedem Zeitschlitz eines Rahmens jeweils ein Bit zur Verfügung.

Gemäß einer weiteren Ausgestaltung des erfindungsgemäßen Verfahrens verwendet die Teilnehmerstation in dem Betriebszustand mit Closed-Loop-Antennendiversität den von den beiden Antennen der Basisstation ausgestrahlten Kanal CPICH zur Berechnung einer mit Hilfe des Gewichtungsvektors vorzunehmenden Phasenanpassung der von diesen beiden Antennen ausgestrahlten Downlink-Signale.

Ein weiterer Gegenstand der Erfindung ist eine Basisstation für ein Funkkommunikationssystem, zum Empfangen eines Uplink-Signals von einer Teilnehmerstation und Senden eines Downlink-Signals an die Teilnehmerstation,

- wobei in dem Funkkommunikationssystem Uplink- und Downlink-Signale in Zeitschlitzen eines Rahmens übertragen werden, wobei ein Rahmen 15 Zeitschlitze aufweist,
- wobei das Funkkommunikationssystem zwischen einem Betriebszustand ohne Closed-Loop-Antennendiversität und dem Betriebszustand mit Closed-Loop-Antennendiversität umschaltbar ist,
- wobei die Basisstation ausgestaltet ist, in einem Betriebszustand mit Closed-Loop-Antennendiversität Rückkopplungsinformation von der Teilnehmerstation zu empfangen und das Downlink-Signal mit einem durch die Rückkopplungsinformation repräsentierten Gewichtungsvektor zu gewichten und über zwei Antennen jeweils gewichtet mit Komponenten des Gewichtungsvektors auszustrahlen,
- wobei die Basisstation ausgestaltet ist, bei einer Unterbrechung des Downlink-Signals von der Teilnehmerstation im Uplink-Signal Rückkopplungsinformation zu empfangen, die einen vor der Unterbrechung festgelegten Gewichtungsvektor repräsentiert,
- wobei die Basisstation ausgestaltet ist, in dem Fall, dass die Unterbrechung sich über einen Zeitpunkt des Umschaltens in den Betriebszustand mit Closed-Loop-Antennendiversität erstreckt, das Downlink-Signal während eines ersten Zeitschlitzes nach der Unterbrechung des Downlink-Signals mit einem vorgegebenen Gewichtungsvektor gewichtet auszustrahlen, wobei der Gewichtungsvektor folgende Komponenten für die zwei Antennen aufweist:

$$w_1 = 1/\sqrt{2}$$

$$w_2 = \frac{1}{2}(1+j) \, ,$$

- und wobei die Basisstation ausgestaltet ist, während des nachfolgenden Zeitschlitzes mit einem aus der Rückkopplungsinformation der Teilnehmerstation berechneten Gewichtungsvektor gewichtet auszustrahlen, wobei der Gewichtungsvektor folgende Komponenten für die zwei Antennen aufweist:

$$w_1 = 1/\sqrt{2}$$

$$w_2 = \frac{\sum_{i-1}^{i} \cos(\phi_i)}{2} + j \frac{\sum_{i-1}^{i} \sin(\phi_i)}{2}$$

wobei i die Nummer des ersten Zeitschlitzes nach der Unterbrechung bezeichnet, und wobei für die Berechnung der Komponente $w_2$ des Gewichtungsvektors ein aus der Rückkopplungsinformation der Teilnehmerstation bestimmter Phasenanpassungswert $\phi_i$ für den ersten Zeitschlitz nach der Unterbrechung verwendet wird und ein fiktiver Phasenanpassungswert $\phi_{i-1}$ für den unmittelbar vorhergehenden (i-1)ten Zeitschlitz, in dem noch kein Downlink-Signal gesendet worden ist, gleich $\pi/2$ gesetzt wird, wenn i=0, 2, 4, 6, 8, 10, 12 oder 14 ist, und gleich 0 gesetzt wird, wenn i=1, 3, 5, 7, 9, 11 oder 13 ist.

Gemäß einer Ausgestaltung der erfindungsgemäßen Basisstation operiert diese gemäß dem UMTS-Standard.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1        ein Blockdiagramm eines UMTS-Funk-Kommunikationssystems, in dem die vorliegende Erfindung anwendbar ist;

Fig. 2        den zeitlichen Verlauf von Uplink- und Downlink-Signal in dem Fall, dass das UMTS-System auf Closed-Loop-Mode 1 wechselt, während sowohl Uplink- als auch Downlink-Signal unterbrochen sind;

Fig. 3        den zeitlichen Verlauf von Uplink- und Downlink-Signal, wenn der Wechsel auf Closed-Loop-Mode 1 während einer Unterbrechung nur des Downlink-Signals stattfindet;

Fig. 4        den zeitlichen Verlauf dieser Signale, wenn der Wechsel auf Closed-Loop-Mode 1 während einer Unterbrechung nur des Uplink-Signals stattfindet;

Fig. 5        den zeitlichen Verlauf von Uplink- und Downlink-Signal, wenn das System während einer Downlink-Unterbrechung in Closed-Loop-Mode 2 übergeht;

Fig. 6 und 7   zwei Varianten des zeitlichen Verlaufs von Uplink- und Downlink-Signal bei einer Unterbrechung des Uplinks nach Übergang in den Closed-Loop-Mode 1 oder 2.

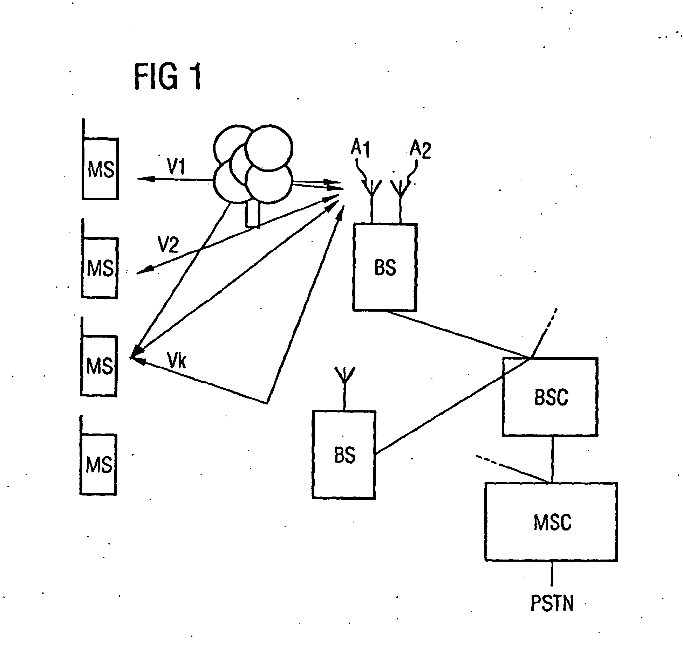

Fig. 1 zeigt die Struktur eines Funk-Kommunikationsystems, in dem die vorliegende Erfindung anwendbar ist. Es besteht aus einer Vielzahl von Mobilvermittlungsstellen MSC, die untereinander vernetzt sind bzw. Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Sie ist mit einer Antenneneinrichtung ausgerüstet, die mehrere Antennen, hier zwei

Antennen $A_1$, $A_2$ umfasst. Diese Antennen $A_1$, $A_2$ werden von der Basisstation BS mit einem für eine bestimmte Teilnehmerstation MS vorgesehenen Downlink-Signal beaufschlagt, wobei zumindest während der Ausstrahlung der Nutzdaten des Downlink-Signals dieses multipliziert mit Koeffizienten $w_1$, $w_2$, eines Gewichtungsvektors W auf die Antennen $A_1$, $A_2$ gegeben wird, um das Downlink-Signal gezielt auf die betreffende Basisstation MS auszurichten.

Die Teilnehmerstationen MS sind durch Messungen, die sie an dem Downlink-Signal durchführen, in der Lage, eine optimale Phasen- und Intensitätsbeziehung zwischen den von den zwei Antennen $A_1$, $A_2$ abgestrahlten Anteilen des Downlink-Signals abzuschätzen, der einen Empfang des Downlink-Signals mit maximaler Feldstärke erlaubt. Die Technik zur Durchführung solcher Messungen ist bekannt und wird, da sie nicht Teil der Erfindung ist, hier nicht erläutert.

Im folgenden wird als Beispiel ein Funk-Kommunikationssystem nach dem UMTS-Standard betrachtet. Ein solches System verfügt neben Betriebsartsarten ohne Antennendiversität bzw. mit O-pen-Loop-Antennendiversität über zwei Betriebsarten mit Closed-Loop-Antennendiversität, als Closed-Loop-Mode 1 und Closed-Loop-Mode 2 bezeichnet, die sich im Format der Rückkopplungsinformation unterscheiden, die von den Teilnehmerstationen MS an die Basisstation BS übermittelt wird, um dieser den Gewichtungsvektor W anzugeben, mit dem das Downlink-Signal gewichtet werden sollte, um jeweils an einer Teilnehmerstation MS optimal empfangbar zu sein.

Im UMTS-System sind Uplink- und Downlink-Signal in Rahmen unterteilt, die jeweils fünfzehn Zeitschlitze für die Nutzdatenübertragung zwischen Basisstation BS und Teilnehmerstation MS vorsehen. Im Uplink-Signal steht in jedem dieser Zeitschlitze ein Bit für die Übertragung von Rückkopplungsinformation zur Verfügung.

Im Closed-Loop-Mode 1 verwendet die Teilnehmerstation MS den von beiden Antennen $A_1$, $A_2$ der Basisstation BS ausgestrahlten Kanal CPICH, um eine mit Hilfe des Gewichtungsvektors an den von diesen zwei Antennen ausgestrahlten Downlink-Signal vorzunehmende Phasenanpassung zu berechnen. Diese Berechnung wird zu jedem Zeitschlitz durchgeführt, in dem die Basisstation BS das Downlink-Signal sendet. Die Teilnehmerstation MS bildet aus der gemessenen optimalen Phasenanpassung $\phi$ eine quantisierte Phasenanpassung $\phi_Q$ nach der Formel

$$\phi_Q = \begin{cases} \pi & wenn \quad \pi/2 < \phi - \phi_r(i) \leq 3\pi/2\pi \\ 0 & sonst \end{cases} \qquad (1)$$

wobei

$$\phi(i)_r = \begin{cases} 0 & wenn \quad i = 0,2,4,6,8,10,12,14 \\ \pi/2 & wenn \quad i = 1,3,5,7,9,11,13 \end{cases}, \qquad (2)$$

wobei i die Nummer eines Zeitschlitzes in einem Rahmen angibt. Wenn $\phi_Q$=0, sendet die Teilnehmerstation MS ein Rückkopplungsinformationsbit mit dem Wert "0", wenn $\phi_Q$=$\pi$ ist, wird der Wert "1" gesendet. Die Basisstation berücksichtigt bei der Festlegung des von ihr verwendeten Gewichtungsvektors W=($w_1$, $w_2$) jeweils das letzte und vorletzte Bit der Rückkopplungsinformation nach folgender Formel

$$w_1 = 1/\sqrt{2}$$
$$w_2 = \frac{\sum_{i=n-1}^{n} \cos(\phi_i)}{2} + j\frac{\sum_{i=n-1}^{n} \sin(\phi_i)}{2} \qquad (3)$$

wobei $\phi_i$ die Werte 0, $\pi$, $\pi/2$, -$\pi/2$ gemäß nachfolgender Tabelle annehmen kann:

(Tabelle 1)

| i | 0 | 1 | 2 | 3 | 4 | 5 | 6 | 7 | 8 | 9 | 10 | 11 | 12 | 13 | 14 |
|---|---|---|---|---|---|---|---|---|---|---|----|----|----|----|----|
| $\phi_Q$=0 | 0 | $\pi/2$ | 0 | $\pi/2$ | 0 | $\pi/2$ | 0 | $\pi/2$ | 0 | $\pi/2$ | 0 | $\pi/2$ | 0 | $\pi/2$ | 0 |
| $\phi_Q$=1 | $\pi$ | -$\pi/2$ | $\pi$ | -$\pi/2$ | $\pi$ | -$\pi/2$ | $\pi$ | -$\pi/2$ | $\pi$ | -$\pi/2$ | $\pi$ | -$\pi/2$ | $\pi$ | -$\pi/2$ | $\pi$ |

Die Komponente $w_1$ des Gewichtungsvektors für die Antenne $A_1$ beträgt immer $w_1 = 1/\sqrt{2}$.

Herkömmlicherweise ist nur eine Initialisierung des Closed-Loop-Mode 1 im ersten Zeitschlitz eines Rahmens vorgesehen. Sie erfolgt, indem noch vor dem Empfang eines ersten Rückkopplungswortes ein Default-Gewichtungsvektor $W^{(0)}$ mit zweiter Komponente $w_2 = \frac{1}{2}(1+j)$ angenommen wird und nach Empfang des ersten Worts der Rückkopplungsinformation im Zeitschlitz 0 des Uplink-Signals $w_2$ nach folgender Formel berechnet wird

$$w_2 = \frac{\cos(\pi/2) + \cos(\phi_0)}{2} + j\frac{\sin(\pi/2) + \sin(\phi_0)}{2} \qquad (4)$$

wobei $\phi_Q$ entsprechend der obigen Tabelle je nach Wert der Rückkopplungsinformation den Wert 0 oder $\pi$ annimmt.

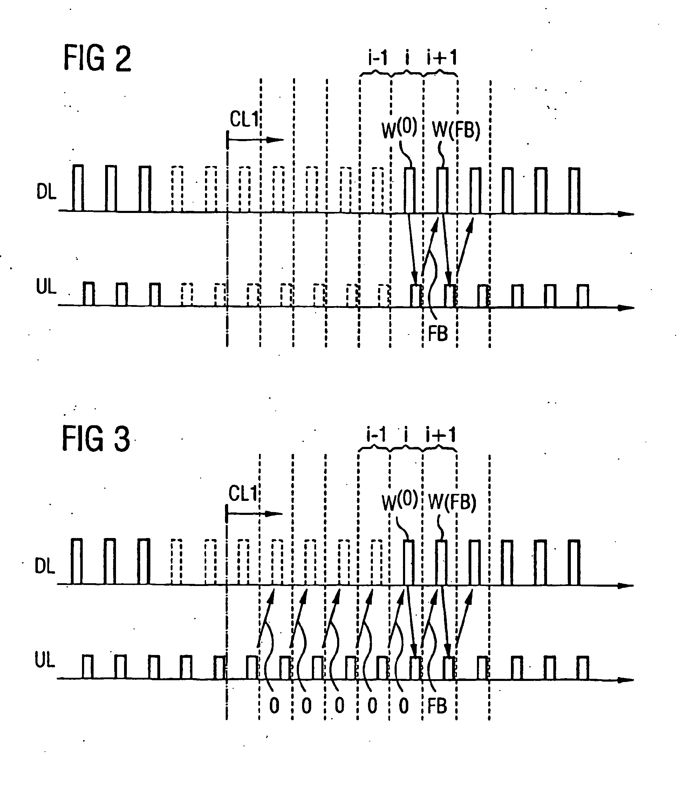

Fig. 2 veranschaulicht den zeitlichen Verlauf von Uplink- und Downlink-Signal beim Übergang in den Closed-Loop-Mode 1 gemäß der vorliegenden Erfindung. Kästchen in der oberen Hälfte des Diagramms der Fig. 2 stellen jeweils Zeitschlitze des von der Basisstation zur Teilnehmerstation übertragenen Downlink-Signals DL dar, wobei ein durchgezogen gezeichnetes Kästchen einen Zeitschlitz bezeichnet, in dem ein Signal gesendet wird und gestrichelte Kästchen Zeitschlitze bezeichnen, in denen die Übertragung des Signals unterbrochen ist, um der Teilnehmerstation Gelegenheit zu geben, Messungen an den Signalen benachbarter Basisstationen durchzuführen. Die untere Hälfte des Diagramms veranschaulicht in entsprechender Weise das Uplink-Signal UL, wobei ebenfalls durchgezogene Kästchen Zeitschlitze bezeichnen, in denen Signal gesendet wird und gestrichelte Kästchen Zeitschlitze bezeichnen, in denen kein Signal gesendet wird. Abwärts gerichtete Pfeile symbolisieren das Senden eines Downlink-Zeitschlitzes im Closed-Loop-Mode; aufwärts gerichtete Pfeile die Übertragung von Rückkopplungsinformation.

Der durch eine vertikale strichpunktierte Linie dargestellte Übergang des Systems in den Closed-Loop-Mode 1 (CL1) fällt in einen Zeitraum, in dem Uplink- und Downlink-Signal unterbrochen sind. Wenn im Zeitschlitz i des Downlink-Signals DL die Basisstation BS wieder zu senden beginnt, hat sie noch keine Rückkopplungsinformation von der Teilnehmerstation MS empfangen. Sie sendet daher in Zeitschlitz i mit dem Default-Gewichtungsvektor $W^{(0)} = (1/\sqrt{2}, (1+j))$.

Während des Zeitschlitzes i des Downlink-Signals DL ist die Teilnehmerstation MS erstmals in der Lage, eine Messung durchzuführen und liefert ein Rückkopplungswort FB, anhand dessen die Basisstation BS eine aktualisierten Gewichtungsvektor w(FB) berechnet, der zum Gewichten des Downlink-Signals im Zeitschlitz i+1 genutzt wird. Die Komponente $w_2$ des Vektors W(FB) wird nach Formel (3) berechnet, wobei ein fiktiver Phasenanpassungswert $\phi_{i-1}$ für den unmittelbar vorhergehenden (i-1)ten Zeitschlitz, in dem noch kein Downlink-Signal gesendet worden ist, gleich $\pi/2$ gesetzt wird, wenn i=0, 2, 4, 6, 8, 12 oder 14 ist und gleich 0 gesetzt wird, wenn i=1, 3, 5, 7, 9, 11 oder 13 ist. Auf diese Weise ist eine korrekte Initialisierung des Gewichtungsvektors in jedem beliebigen Zeitschlitz des Rahmens möglich. Mit anderen Worten wird als fiktiver Phasenanpassungswert $\phi_{i-1}$ derjenige Wert gewählt, der sich auch dann ergeben hätte, wenn im Zeitschlitz (i-1) ein den Default-Gewichtungsvektor spezifizierendes Rückkopplungsinformationsbit mit dem Wert 0 übertragen worden wäre.

Fig. 3 veranschaulicht den Fall, dass zum Zeitpunkt des Übergangs in den Closed-Loop-Mode 1 lediglich das Downlink-Signal DL unterbrochen ist, das Uplink-Signal UL jedoch nicht. Wenn in dieser Situation die Basisstation das Uplink-Signal empfängt, so erwartet sie in jedem Zeitschlitz von diesem eine Rückkopplungsinformation zu finden, die Teilnehmerstation MS hat jedoch unmittelbar nach Beginn des Closed-Loop-Mode 1 noch keine Messung am Downlink-Signal durchführen können, aus der sie eine Rückkopplungsinformation ableiten könnte. In dieser Situation überträgt die Teilnehmerstation in jedem Zeitschlitz des Uplink-Signals eine Rückkopplungsinformation mit dem Wert 0. Wie sich anhand von Formel (3) leicht nachvollziehen läßt, ergibt sich aus der Übertragung dieser Rückkopplungsinformation für die Basisstation BS stets der Default-Gewichtungsvektor $W^{(0)}$. Dieser wird daher von der Basisstation BS zum Gewichten des ersten Zeitschlitzes i nach der Unterbrechung eingesetzt. Die Teilnehmerstation MS leitet während des Zeitschlitzes i des Downlink-Signals DL ein Rückkopplungsbit FB ab, das an die Basisstation BS übertragen wird und es dieser ermöglicht, für den Zeitschlitz (i+1) einen aktualisierten Gewichtungsvektor W(FB) zu wählen.

Während der Downlink-Unterbrechung liefert hier die Teilnehmerstation MS gewissermaßen Dummy-Rückkopplungsinformationen, die einen vorgegebenen, nicht auf eine tatsächliche Messung zurückgehenden Inhalt hat. Die Basisstation findet in jedem Zeitschlitz des Uplink-Signals UL, egal, ob er in einer Unterbrechung des Downlink-Signals DL erzeugt worden ist oder nicht, eine auswertbare Rückkopplungsinformation, so dass bei der Auswertung des Uplink-Signals UL nicht zwischen Zeiten, in denen das Downlink-Signal DL regulär gesendet wird, und solchen, in denen es unterbrochen ist, unterschieden werden muss. Da die Basisstation kontinuierlich mit Rückkopplungsinformation versorgt wird, ist eine spezielle Initialisierungsprozedur nach Ende der Unterbrechung nicht notwendig.

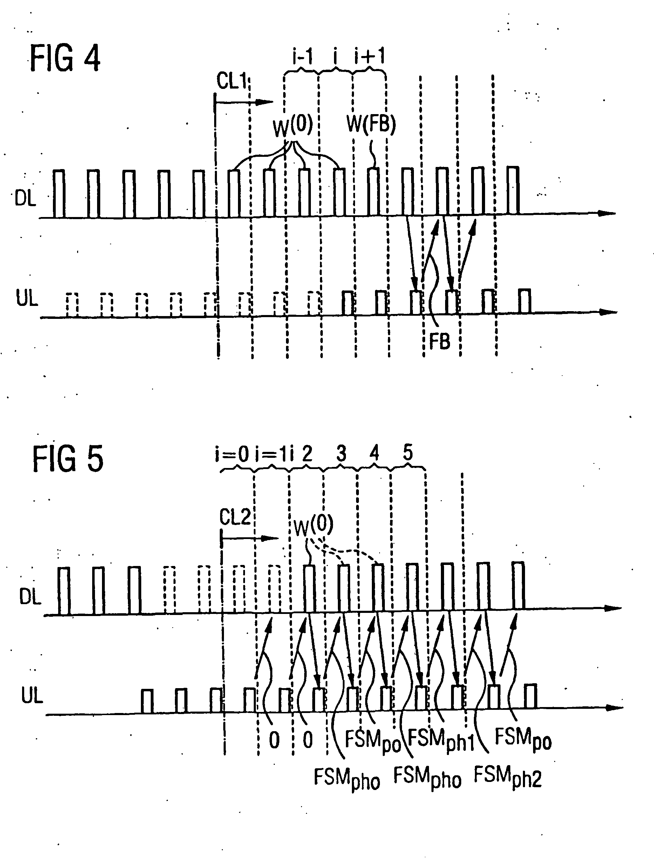

Fig. 4 betrifft den Fall, dass der Wechsel zum Closed-Loop-Mode 1 während einer Unterbrechung des Uplink-Signals UL stattfindet, das Downlink-Signal DL aber normal gesendet wird. So lange die Unterbrechung des Uplink-Signals anhält, bekommt die Basisstation von der Teilnehmerstation keine Rückkopplungsinformation geliefert, auch wenn letztere Signale im Common Pilot Channel (CPICH) des Downlink-Signals empfängt und in der Lage ist, eine Phasenanpassung zu messen. Der erste Zeitschlitz nach der Unterbrechung, in dem die Teilnehmerstation ein Uplink-Signal sendet, ist der Zeitschlitz i. In diesem Zeitschlitz i überträgt die Teilnehmerstation MS die die aktuell aus dem Downlink (CPICH) ermittelte Rückkopplungsinformation FB, und die Basisstation BS legt anhand der Rückkopplungsinformation FB den im Zeitschlitz i+1 des Downlink-Signals verwendeten Gewichtungsvektor W(FB) fest. Diese Festlegung erfolgt in der gleichen Weise abhängig von der Nummer i des Zeitschlitzes, wie oben mit Bezug auf Fig. 2 beschrieben.

Fig. 5 veranschaulicht den Fall, dass eine Umschaltung in den Closed-Loop-Mode 2 (CL2) während einer Unterbrechung des Downlink-Signals erfolgt.

Im Closed-Loop-Mode 2 wird die Rückkopplungsinformation in Form von Vier-Bit-Datenwörtern an die Basisstation BS geliefert, wobei die drei signifikantesten Bits $FSM_{ph}$ eines solchen Datenworts die relative Phasenlage der zwei Komponenten des Gewichtungsvektors spezifizieren und das am wenigsten signifikante Bit $FSM_{po}$ das Verhältnis ihrer Beträge. Die Übertragung eines solchen Vier-Bit-Datenworts kann jeweils nur in den Zeitschlitzen 0, 4, 8, 12 eines UMTS-Rahmens beginnen, wobei das Bit $FSM_{po}$ des im Zeitschlitz 12 beginnenden Datenworts nicht übertragen wird.

Wenn beim Umschalten in den Closed-Loop-Mode 2 jeweils zu Beginn eines Rahmens weder Uplink- noch Downlink-Signal unterbrochen ist, so wird in bekannter Weise zum Senden des Zeitschlitzes 0 (i=0) im Closed-Loop-Mode 2, für den der Basisstation noch keine Rückkopplungsinformation von der Teilnehmerstation vorliegt, ein Standard-Gewichtungsvektor $W^{(0)}$ = (1/2, -1/2) verwendet. In den darauffolgenden Zeitschlitzen des Uplink-Signals UL liefert die Teilnehmerstation MS jeweils der Reihe nach die vier Bits des Rückkopplungsworts. Dabei spezifizieren die drei Phasen-Bits $FSM_{ph}$ des Rückkopplungswortes jeweils Phasendifferenzen zwischen den Antennen $A_1$, $A_2$ gemäß folgender Tabelle

(Tabelle 2)

| $FSM_{ph}$ | Phasendifferenz zwischen Antennen $A_1$, $A_2$ [rad] |
| --- | --- |
| 000 | $\pi$ |
| 001 | $-3\pi/4$ |
| 011 | $-\pi/2$ |
| 010 | $-\pi/4$ |
| 110 | 0 |
| 111 | $\pi/4$ |
| 101 | $\pi/2$ |
| 100 | $3\pi/4$ |

und das Leistungs-Rückkopplungsbit $FSM_{po}$ ermöglicht die Unterscheidung zwischen folgenden relativen Sendeleistun-gen der Antennen $A_1$, $A_2$:

(Tabelle 3)

| $FSM_{po}$ | Leistung $A_1$ | Leistung $A_2$ |
| --- | --- | --- |
| 0 | 0,2 | 0,8 |
| 1 | 0,8 | 0,2 |

Die Basisstation BS beginnt noch vor der vollständigen Übertragung des Vier-Bit-Rückkopplungswortes, den verwendeten Gewichtungsvektor anhand der sukzessive übertragenen Rückkopplungsbits gemäß folgender Tabelle zu aktualisieren, wobei in der Tabelle in Strich (-) ein noch nicht gesendetes Bit bezeichnet.

(Tabelle 4)

| $FSM_{ph}$ | Phasendifferenz zwischen Antennen $A_1$, $A_2$ [rad] |
| --- | --- |
| - - - | $\pi$ (entspricht Default-Initialisierungsvektor) |
| 0 - - | $\pi$ |
| 1 - - | 0 |

(fortgesetzt)

| FSM$_{ph}$ | Phasendifferenz zwischen Antennen A$_1$, A$_2$ [rad] |
|---|---|
| 0 0 - | $\pi$ |
| 0 1 - | $-\pi/2$ |
| 1 1 - | 0 |
| 1 0 - | $\pi/2$ |
| 0 0 0 | $\pi$ |
| 0 0 1 | $-3\pi/4$ |
| 0 1 1 | $-\pi/2$ |
| 0 1 0 | $-\pi/4$ |
| 1 1 0 | 0 |
| 1 1 1 | $\pi/4$ |
| 1 0 1 | $\pi/2$ |
| 1 0 0 | $\pi/4$ |

Betrachten wir nun wieder den in Fig. 5 gezeigten Fall, dass zu Beginn eines Rahmens in den Closed-Loop-Mode 2 umgeschaltet worden ist und in den Zeitschlitzen i=0,1 des Downlink-Signals DL nicht gesendet wird. In diesem Fall liefert die Teilnehmerstation MS so lange Rückkopplungsbits mit dem Wert 0 an die Basisstation BS, bis die Downlink-Unterbrechung beendet ist und die Teilnehmerstation MS zum ersten Mal in der Lage ist, eine Messung am CPICH durchzuführen. In dem in der Fig. gezeigten Beispiel liefert die Teilnehmerstation MS in den Zeitschlitzen i=0,1 ein Rückkopplungsbit mit dem Wert 0, was von der Basisstation gemäß obiger Tabelle 4 als eine von der Teilnehmerstation spezifizierte Phasendifferenz zwischen den Antennen A$_1$, A$_2$ von $\pi$ interpretiert wird.

Erst anhand des CPICHs während des Downlink-Zeitschlitzes 2 ist die Teilnehmerstation MS in der Lage, tatsächlich eine Messung durchzuführen.

Gemäß einer ersten Alternative liefert sie als Ergebnis der Messung das in diesem Zeitschlitz 2 von der Basisstation BS als Rückkopplungsinformation erwartete niedrig signifikante Phasenbit FSMph,2 des Rückkopplungs-Datenworts. Die Basisstation BS ignoriert jedoch dieses Phasenbit, genauso wie das in nachfolgendenm Zeitschlitz 3 gelieferte Leistungsbit FSMpo und verwendet weiterhin den Default-Gewichtungsvektor W(0), d.h. sie verhält sich so, als ob anstelle dieser zwei Rückkopplungsbits Nullen gesendet worden wären.

Erst ab dem Zeitschlitz 4, in dem die Teilnehmerstation mit der Übertragung eines neuen, vollständigen Rückkopplungsworts beginnt, fängt die Basisstation an, die gelieferte Rückkopplungsinformation zu berücksichtigen.

Gemäß einer zweiten Alternative könnte auch vorgesehen werden, dass die Teilnehmerstation MS nach Ende einer Unterbrechung des Downlink-Signals DL anstelle restlicher Bits eines angefangenen Rückkopplungs-Datenworts konstant Nullen sendet und erst mit Beginn eines neuen Datenworts, in einem der Zeitschlitze 0, 4, 8 oder 12, beginnt, aktuelle Rückkopplungsinformation zu liefern.

Wenn abweichend von der Darstellung der Fig. 5 die Unterbrechung des Downlink-Signals sich über den Zeitschlitz 3 und eventuell darüber hinaus erstreckt, so liefert die Teilnehmerstation MS auch im Zeitschlitz 3 ein Rückkopplungsbit mit dem Wert 0, und der für den fünften (i=4) Zeitschlitz des Downlink-Signals verwendete Gewichtungsvektor nimmt den Wert W=(0,2; -0,8) an. Dieser Vektor ist mit dem ursprünglich vorgegebenen Gewichtungsvektor (0,5; -0,5) nicht mehr identisch, es ist aber unter den der Basisstation zu Gebote stehenden Gewichtungsvektoren zusammen mit dem Vektor (0,8; -0,2) derjenige, der die größte Ähnlichkeit mit dem vorgegebenen Gewichtungsvektor aufweist. Als Maß der Ähnlichkeit von zwei Vektoren kann z.B. das Skalarprodukt der auf Einheitsbetrag normierten Vektoren herangezogen werden.

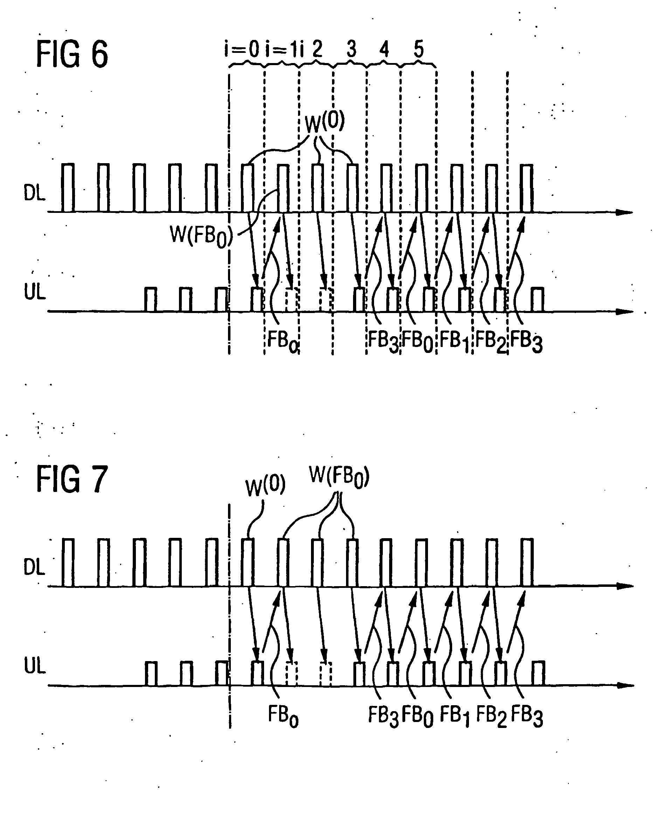

Fig. 6 zeigt eine Uplink-Unterbrechung in Zeitschlitzen i=1, 2 in einem Closed Loop Mode. Während und vor der Übertragung des Downlink-Signals im Zeitschlitz 0 hat die Teilnehmerstation Rückkopplungsinformation ermitteln können; sie liefert ein erstes Bit FB$_0$ davon an die Basisstation im Zeitschlitz 0 des Uplinks vor der Unterbrechung. Dieses wird von der Basisstation in herkömmlicher Weise, wie für Closed Loop Mode 1 und 2 des UMTS-Systems bekannt, ausgewertet. Die Basisstation sendet Im Zeitschlitz 1 des Downlinks mit einem anhand dieses Rückkopplungs-bits aktualisierten Gewichtungsvektor w(FB$_0$). In den darauffolgenden Zeitschlitzen 1, 2 empfängt die Basisstation kein Uplink-Signal und folglich auch keine weitere Rückkopplungsinformation. Die Basisstation verwirft daraufhin das erste Rückkopplungsbit und sendet das Downlink-Signal in den Zeitschlitzen 2 und 3 mit dem Default-Gewichtungsvektor. Im Falle des Closed Loop Mode 1 kann nach Ende der Unterbrechung, mit dem im Uplink-Zeitschlitz 3 übertragenen Rückkopplungsbit $FB_3$, der Gewichtungsvektor in der gleichen Weise aktualisiert werden wie oben für den Fall beschrieben, dass der Übergang in den Closed Loop Mode 1 in eine Uplink-Unterbrechung fällt. Im Falle des Closed Loop Mode 2 ignoriert die Basisstation auch das im Uplink-Zeitschlitz 3 übertragene Rückkopplungsbit $FB_3$ (das hier dem Leistungsbit $FSM_{po}$ entspricht) und wertet erst das im Uplink-Zeitschlitz 4 übertragene Rückkopplungsbit aus.

Fig. 7 zeigt ein alternatives Verfahren für den Closed Loop Mode 2. Die Aktualisierung des Gewichtungsvektors zu w $(FB_0)$ nach Übertragung des Rückkopplungsbits $FB_0$ vor der Unterbrechung erfolgt wie oben mit Bezug auf Fig. 7 beschrieben. Während der Unterbrechung verwendet die Basisstation im Downlink so lange den Gewichtungsvektor w $(FB_0)$, bis sie ein neues erstes Bit $FB_0$ eines weiteren Rückkopplungswortes empfängt. Das letzte Bit $FB_3$ des unvollständig übertragenen Rückkopplungswortes bleibt unberücksichtigt.

Durch Verzögerungen bei der Übertragung (Laufzeiten) und der Berechnung des Gewichtungsvektors ist es möglich, dass die Aktualisierung des Gewichtungsvektors W(FB) aufgrund eines in Zeitschlitz i gesendeten Rückkopplungsbits erst zu Zeitschlitz (i+2) oder auch später erfolgt. Die genannten Verfahren sind hier ebenfalls anwendbar.

## Patentansprüche

1. Verfahren zum Betreiben eines zellularen Funk-kommunikationssystems mit einer zwei Antennen aufweisenden Basisstation, die einen Betriebszustand mit Closed-Loop-Antennendiversität unterstützt, in dem sie ein Downlink-Signal an den einzelnen Antennen jeweils gewichtet mit Komponenten eines Gewichtungsvektors ausstrahlt, und mit einer Teilnehmerstation zum Empfangen des Downlink-Signals und Senden eines Uplink-Signals an die Basisstation, wobei die Teilnehmerstation durch Messungen an dem Downlink-Signal einen Gewichtungsvektor ermittelt, der einen guten Empfang des Downlink-Signals an der Teilnehmerstation gewährleistet und Rückkopplungsinformation an die Basisstation liefert, die den ermittelten Gewichtungsvektor repräsentiert,

- bei dem Signale in Zeitschlitzen eines Rahmens übertragen werden, wobei ein Rahmen 15 Zeitschlitze aufweist,
**dadurch gekennzeichnet, dass**
- bei einer Unterbrechung des Downlink-Signals die Teilnehmerstation im Uplink-Signal Rückkopplungsinformation an die Basisstation liefert, die einen vor der Unterbrechng festgelegten Gewichtungsvektor repräsentiert,
- das Funkkommunikationssystem zwischen einem Betriebszustand ohne Closed-Loop-Antennendiversität und dem Betriebszustand mit Closed-Loop-Antennendiversität umschaltbar ist,
- in dem Fall, dass die Unterbrechung des Downlink-Signals sich über einen Zeitpunkt des Umschaltens in den Betriebszustand mit Closed-Loop-Antennendiversität erstreckt, die Basisstation das Downlink-Signal während eines ersten Zeitschlitzes nach der Unterbrechung des Downlink-Signals mit einem vorgegebenen Gewichtungsvektor gewichtet ausstrahlt, wobei der Gewichtungsvektor folgende Komponenten für die zwei Antennen aufweist:

$$w_1 = 1/\sqrt{2}$$

$$w_2 = \frac{1}{2}(1+j) \, ,$$

- und während des nachfolgenden Zeitschlitzes mit einem aus der Rückkopplungsinformation der Teilnehmerstation berechneten Gewichtungsvektor gewichtet ausstrahlt, wobei der Gewichtungsvektor folgende Komponenten für die zwei Antennen aufweist:

$$w_1 = 1/\sqrt{2}$$

$$w_2 = \frac{\sum_{i-1}^{i}\cos(\phi_i)}{2} + j\frac{\sum_{i-1}^{i}\sin(\phi_i)}{2}$$

wobei i die Nummer des ersten Zeitschlitzes nach der Unterbrechung bezeichnet, und wobei für die Berechnung

der Komponente $w_2$ des Gewichtungsvektors ein aus der Rückkopplungsinformation der Teilnehmerstation bestimmter Phasenanpassungswert $\phi_i$ für den ersten Zeitschlitz nach der Unterbrechung verwendet wird und ein fiktiver Phasenanpassungswert $\phi_{i-1}$ für den unmittelbar vorhergehenden (i-1)ten Zeitschlitz, in dem noch kein Downlink-Signal gesendet worden ist, gleich n/2 gesetzt wird, wenn i=0, 2, 4, 6, 8, 10, 12 oder 14 ist, und gleich 0 gesetzt wird, wenn i=1, 3, 5, 7, 9, 11 oder 13 ist.

2. Verfahren nach Anspruch 1,
   bei dem von der Teilnehmerstation zwischen dem Zeitpunkt des Umschaltens in den Betriebszustand mit Closed-Loop-Antennendiversität und der Ermittlung einer Rückkopplungsinformation aus dem empfangenen Downlink-Signal nach der Unterbrechung Rückkopplungsinformationen geliefert werden, die aus Nullen bestehen.

3. Verfahren nach Anspruch 1 oder 2,
   bei dem für die Übertragung der Rückkopplungsinformation in jedem Zeitschlitz eines Rahmens jeweils ein Bit zur Verfügung steht.

4. Verfahren nach Anspruch 1,
   bei dem die Teilnehmerstation in dem Betriebszustand mit Closed-Loop-Antennendiversität den von den beiden Antennen der Basisstation ausgestrahlten Kanal CPICH zur Berechnung einer mit Hilfe des Gewichtungsvektors vorzunehmenden Phasenanpassung der von diesen beiden Antennen ausgestrahlten Downlink-Signale verwendet.

5. Basisstation für ein Funkkommunikationssystem, zum Empfangen eines Uplink-Signals von einer Teilnehmerstation und Senden eines Downlink-Signals an die Teilnehmerstation,

   - wobei in dem Funkkommunikationssystem Uplink- und Downlink-Signale in Zeitschlitzen eines Rahmens übertragen werden, wobei ein Rahmen 15 Zeitschlitze aufweist, **gekennzeichnet dadurch, dass**
   - das Funkkommunikationssystem zwischen einem Betriebszustand ohne Closed-Loop-Antennendiversität und dem Betriebszustand mit Closed-Loop-Antennendiversität umschaltbar ist,
   - die Basisstation ausgestaltet ist, bei einer Unterbrechung des Downlink-Signals von der Teilnehmerstation im Uplink-Signal Rückkopplungsinformation zu empfangen, die einen vor der Unterbrechung festgelegten Gewichtungsvektor repräsentiert,
   - die Basisstation ausgestaltet ist, in einem Betriebszustand mit Closed-Loop-Antennendiversität Rückkopplungsinformation von der Teilnehmerstation zu empfangen und das Downlink-Signal mit einem durch die Rückkopplungsinformation repräsentierten Gewichtungsvektor zu gewichten und über zwei Antennen jeweils gewichtet mit Komponenten des Gewichtungsvektors auszustrahlen,
   - die Basisstation ausgestaltet ist, in dem Fall, dass die Unterbrechung sich über einen Zeitpunkt des Umschaltens in den Betriebszustand mit Closed-Loop-Antennendiversität erstreckt, das Downlink-Signal während eines ersten Zeitschlitzes nach der Unterbrechung des Downlink-Signals mit einem vorgegebenen Gewichtungsvektor gewichtet auszustrahlen, wobei der Gewichtungsvektor folgende Komponenten für die zwei Antennen aufweist:

$$w_1 = 1/\sqrt{2}$$

$$w_2 = \frac{1}{2}(1+j) \,,$$

   - und die Basisstation ausgestaltet ist, während des nachfolgenden Zeitschlitzes mit einem aus der Rückkopplungsinformation der Teilnehmerstation berechneten Gewichtungsvektor gewichtet auszustrahlen, wobei der Gewichtungsvektor folgende Komponenten für die zwei Antennen aufweist:

$$w_1 = 1/\sqrt{2}$$

$$w_2 = \frac{\sum_{i-1}^{i} \cos(\phi_i)}{2} + j\frac{\sum_{i-1}^{i} \sin(\phi_i)}{2}$$

wobei i die Nummer des ersten Zeitschlitzes nach der Unterbrechung bezeichnet, und wobei für die Berechnung der Komponente $w_2$ des Gewichtungsvektors ein aus der Rückkopplungsinformation der Teilnehmerstation bestimmter Phasenanpassungswert $\phi_i$ für den ersten Zeitschlitz nach der Unterbrechung verwendet wird und ein fiktiver Phasenanpassungswert $\phi_{i-1}$ für den unmittelbar vorhergehenden (i-1)ten Zeitschlitz, in dem noch kein Downlink-Signal gesendet worden ist, gleich n/2 gesetzt wird, wenn i=0, 2, 4, 6, 8, 10, 12 oder 14 ist, und gleich 0 gesetzt wird, wenn i=1, 3, 5, 7, 9, 11 oder 13 ist.

**6.** Basisstation nach Anspruch 5,
welche gemäß einem UMTS-Standard operiert.

**Claims**

**1.** Method for operating a cellular radio communication system with a base station having two antennas, which base station supports an operating state with closed-loop antenna diversity, in which operating state it emits at the individual antennas a downlink signal weighted in each case with components of a weighting vector, and with a user station for receiving the downlink signal and transmitting an uplink signal to the base station, wherein the user station determines through measurements on the downlink signal a weighting vector which ensures a good reception of the downlink signal at the user station and delivers back-coupling information to the base station, which back-coupling information represents the determined weighting vector,

- wherein signals are transmitted in time slots of a frame, a frame having 15 time slots, **characterised in that**
- in the event of an interruption in the downlink signal, the user station delivers back-coupling information in the uplink signal to the base station, which back-coupling information represents a weighting vector determined before the interruption,
- the radio communication system can be switched between an operating state without closed-loop antenna diversity and the operating state with closed-loop antenna diversity,
- in the event that the interruption in the downlink signal extends over a timepoint of the switchover to the operating state with closed-loop antenna diversity, the base station emits the downlink signal during a first time slot after the interruption in the downlink signal, weighted with the predefined weighting vector, wherein the weighting vector has the following components for the two antennas:

$$w_1 = 1/\sqrt{2}$$

$$w_2 = \frac{1}{2}(1+j)$$

- and during the subsequent time slot emits on a weighted basis using a weighting vector calculated from the back-coupling information from the user station, wherein the weighting vector has the following components for the two antennas:

$$w_1 = 1/\sqrt{2}$$

$$w_2 = \frac{\sum_{i-1}^{i} \cos(\phi_i)}{2} + j\frac{\sum_{i-1}^{i} \sin(\phi_i)}{2}$$

i designating the number of the first time slot after the interruption, and a phase adjustment value $\phi_i$ determined from

the back-coupling information from the user station for the first time slot after the interruption being used for calculating the component $w_2$ of the weighting vector and a fictitious phase adjustment value $\phi_{i-1}$ being set to n/2 for the immediately preceding (i-1)th time slot in which no downlink signal has yet been transmitted if i = 0, 2, 4, 6, 8, 12 or 14 and to 0 if i = 1, 3, 5, 7, 9, 11 or 13.

2. Method according to claim 1,
   wherein back-coupling information consisting of zeros is delivered by the user station between the time of switchover to the operating state with closed-loop antenna diversity and the determination of back-coupling information from the received downlink signal after the interruption.

3. Method according to claim 1 or 2,
   wherein one bit is available in each case for the transmission of the back-coupling information in each time slot of a frame.

4. Method according to claim 1,
   wherein in the operating state with closed-loop antenna diversity the user station uses the channel CPICH emitted by both antennas of the base station in order with the aid of the weighting vector to calculate a phase adjustment of the downlink signals emitted by these two antennas.

5. Base station for a radio communication system, for receiving an uplink signal from a user station and transmitting a downlink signal to the user station,

   - wherein in the radio communication system uplink and downlink signals are transmitted in time slots of a frame, a frame having 15 time slots,
   **characterised in that**
   - the radio communication system can be switched between an operating state without closed-loop antenna diversity and the operating state with closed-loop antenna diversity,
   - the base station is designed to receive back-coupling information, representing a weighting factor determined before the interruption, in the uplink signal in the event of an interruption in the downlink signal from the user station,
   - the base station is designed to receive back-coupling information from the user station in an operating state with closed-loop antenna diversity and to weight the downlink signal with a weighting vector represented by the back-coupling information and to emit said downlink signal via two antennas, weighted with components of the weighting vector in each case,
   - the base station is designed, in the event that the interruption extends over a timepoint of the switchover to the operating state with closed-loop antenna diversity, to emit the downlink signal during a first time slot after the interruption in the downlink signal, weighted with a predefined weighting vector, the weighting vector having the following components for the two antennas:

$$w_1 = 1/\sqrt{2}$$

$$w_2 = \frac{1}{2}(1+j)$$

   - and the base station is designed to emit during the subsequent time slot on a weighted basis using a weighting vector calculated from the back-coupling information from the user station, the weighting vector having the following components for the two antennas:

$$w_1 = 1/\sqrt{2}$$

$$w_2 = \frac{\sum_{i-1}^{i}\cos(\phi_i)}{2} + j\frac{\sum_{i-1}^{i}\sin(\phi_i)}{2}$$

i designating the number of the first time slot after the interruption, and a phase adjustment value $\phi_i$ determined from the back-coupling information from the user station for the first time slot after the interruption being used for calculating the component $w_2$ of the weighting vector and a fictitious phase adjustment value $\phi_{i-1}$ being set to n/2 for the immediately preceding (i-1)th time slot in which no downlink signal has yet been transmitted if i = 0, 2, 4, 6, 8, 12 or 14 and to 0 if i = 1, 3, 5, 7, 9, 11 or 13.

6. Base station according to claim 5,
   which operates in accordance with a UMTS standard.


**Revendications**

1. Procédé pour faire fonctionner un système de radiocommunication cellulaire comprenant une station de base présentant deux antennes, laquelle supporte un état de fonctionnement avec diversité d'antennes en boucle fermée, dans lequel elle émet un signal de liaison descendante sur les antennes individuelles de manière respectivement pondérée avec des composantes d'un vecteur de pondération, et comprenant une station d'abonné destinée à recevoir le signal de liaison descendante et à émettre un signal de liaison montante à la station de base, la station d'abonné établissant un vecteur de pondération au moyen de mesures sur le signal de liaison descendante, lequel garantit une bonne réception du signal de liaison descendante à la station d'abonné et fournit à la station de base une information de rétroaction représentant le vecteur de pondération établi,

   - dans lequel des signaux sont transmis dans des créneaux temporels d'une trame, une trame présentant 15 créneaux temporels,
   **caractérisé en ce que**
   - lors d'une interruption du signal de liaison descendante, la station d'abonné fournit dans le signal de liaison montante une information de rétroaction à la station de base, qui représente un vecteur de pondération fixé avant l'interruption,
   - le système de radiocommunication est commutable entre un état de fonctionnement sans diversité d'antennes en boucle fermée et l'état de fonctionnement avec diversité d'antennes en boucle fermée,
   - dans le cas où l'interruption du signal de liaison descendante s'étende sur un moment de la commutation dans l'état de fonctionnement avec diversité d'antennes en boucle fermée, la station de base émet le signal de liaison descendante pendant un premier créneau temporel après l'interruption du signal de liaison descendante, de manière pondérée avec un vecteur de pondération prédéfini, le vecteur de pondération présentant les composantes suivantes pour les deux antennes :

$$w_1 = 1/\sqrt{2}$$

$$w_2 = \frac{1}{2}(1 + j)\,,$$

   - et émet de manière pondérée pendant le créneau temporel suivant avec un vecteur de pondération calculé à partir de l'information de rétroaction de la station d'abonné, le vecteur de pondération présentant les composantes suivantes pour les deux antennes :

$$w_1 = 1/\sqrt{2}$$

$$w_2 = \frac{\sum_{i-1}^{i} \cos(\phi_i)}{2} + j \frac{\sum_{i-1}^{i} \sin(\phi_i)}{2}$$

i désignant le numéro du premier créneau temporel après l'interruption, et une valeur d'adaptation de phase $\phi_i$, pour le premier créneau temporel après l'interruption, déterminée à partir de l'information de rétroaction de la station d'abonné étant utilisée pour le calcul de la composante $w_2$ du vecteur de pondération et une valeur fictive d'adaptation de phase $\phi_{i-1}$, pour le $(i-1)^{\text{ème}}$ créneau temporel directement précédent, dans lequel aucun signal de liaison descendante n'a encore été émis, égal $\pi/2$ étant mise lorsque i = 0, 2, 4, 6, 8, 10, 12 ou 14, et égal 0 est mise lorsque i = 1, 3, 5, 7, 9, 11 ou 13.

2. Procédé selon la revendication 1,
   dans lequel des informations de rétroaction, qui sont constituées de zéros, sont fournies après l'interruption par la station d'abonné entre le moment de la commutation dans l'état de fonctionnement avec diversité d'antennes en boucle fermée et l'établissement d'une information de rétroaction à partir du signal de liaison descendante reçu.

3. Procédé selon la revendication 1 ou 2,
   dans lequel pour la transmission de l'information de rétroaction, respectivement un bit est disponible dans chaque créneau temporel d'une trame.

4. Procédé selon la revendication 1,
   dans lequel la station d'abonné, à l'état de fonctionnement avec diversité d'antennes en boucle fermée, utilise le canal CPICH émis par les deux antennes de la station de base pour le calcul d'une adaptation de phase, à réaliser à l'aide du vecteur de pondération, des signaux de liaison descendante émis par ces deux antennes.

5. Station de base pour un système de radiocommunication, destinée à la réception d'un signal de liaison montante par une station d'abonné et à l'émission d'un signal de liaison descendante à la station d'abonné,

   - dans le système de radiocommunication, des signaux de liaison montante et de liaison descendante étant transmis dans des créneaux temporels d'une trame, une trame présentant 15 créneaux temporels,
   **caractérisée en ce que**
   - le système de radiocommunication est commutable entre un état de fonctionnement sans diversité d'antennes en boucle fermée et l'état de fonctionnement avec diversité d'antennes en boucle fermée,
   - la station de base est réalisée pour, lors d'une interruption du signal de liaison descendante, recevoir de la station d'abonné dans le signal de liaison montante une information de rétroaction, qui représente un vecteur de pondération fixé avant l'interruption,
   - la station de base est réalisée pour, dans un état de fonctionnement avec diversité d'antennes en boucle fermée, recevoir une information de rétroaction de la station d'abonné et pondérer le signal de liaison descendante avec un vecteur de pondération représenté par l'information de rétroaction et pour émettre, par l'intermédiaire de deux antennes, de manière respectivement pondérée avec des composantes du vecteur de pondération,
   - la station de base est réalisée, pour, au cas où l'interruption s'étende sur un moment de la commutation dans l'état de fonctionnement avec diversité d'antennes en boucle fermée, émettre le signal de liaison descendante pendant un premier créneau temporel après l'interruption du signal de liaison descendante, de manière pondérée avec un vecteur de pondération prédéfini, le vecteur de pondération présentant les composantes suivantes pour les deux antennes :

$$w_1 = 1/\sqrt{2}$$

$$w_2 = \frac{1}{2}(1 + j) \,,$$

- et **en ce que** la station de base est réalisée pour émettre pendant le créneau temporel suivant de manière pondérée avec un vecteur de pondération calculé à partir de l'information de rétroaction de la station d'abonné, le vecteur de pondération présentant les composantes suivantes pour les deux antennes :

$$w_1 = 1/\sqrt{2}$$

$$w_2 = \frac{\sum_{i-1}^{i}\cos(\phi_i)}{2} + j\frac{\sum_{i-1}^{i}\sin(\phi_i)}{2}$$

i désignant le numéro du premier créneau temporel après l'interruption, et une valeur d'adaptation de phase $\phi_i$, pour le premier créneau temporel après l'interruption, déterminée à partir de l'information de rétroaction de la station d'abonné étant utilisée pour le calcul de la composante $w_2$ du vecteur de pondération et une valeur fictive d'adaptation de phase $\phi_{i-1}$, pour le $(i-1)^{ème}$ créneau temporel directement précédent, dans lequel aucun signal de liaison descendante n'a encore été émis, égal $\pi/2$ étant mise lorsque i = 0, 2, 4, 6, 8, 10, 12 ou 14, et égal 0 est mise lorsque i = 1, 3, 5, 7, 9, 11 ou 13.

6. Station de base selon la revendication 5,
   laquelle opère suivant une norme UMTS.

FIG 1

EP 1 919 099 B1

FIG 2

FIG 3

18

FIG 4

FIG 5

**FIG 6**

**FIG 7**